# EUROPÄISCHE PATENTANMELDUNG

(11) **EP 2 309 149 A2**
(43) Veröffentlichungstag der Anmeldung: **13.04.2011**
(21) Anmeldenummer: 10013367.7
(22) Anmeldetag: 06.10.2010
(51) Int. Cl.: F16F 9/32

(54) **Kraftfahrzeug mit Dämpfervorrichtung, Dämpfervorrichtung sowie Bauteil für Dämpfervorrichtung**

(30) Priorität: 06.10.2009 DE 102009048625
(71) Anmelder: Audi AG, 85045 Ingolstadt (DE)
(72) Erfinder: Willems, Marco, 85053 Ingolstadt (DE); Merkes, Wolfgang, 81929 München (DE)
(74) Vertreter: Patzelt, Heike Anna Maria

(57) **Zusammenfassung**

Eine Dämpfervorrichtung (10) zur Dämpfung der Relativbewegung zwischen einem Fahrzeugaufbau und einem Rad eines Kraftfahrzeuges weist Bauteile (22, 24) aus z. B. Aluminium auf, in die Piezoelemente (26, 28) integriert, z. B. beim Druckgießen der Aluminiumbauteile eingegossen, sind. Solche Piezoelemente liefern Messwerte für eine Regelung der Dämpfkraft. Durch die Lösung wird im Vergleich zu herkömmlichen Lösungen Bauraum für das Piezoelement eingespart.

## Beschreibung

Die Erfindung befasst sich mit der Ausgestaltung einer Dämpfervorrichtung in einem Kraftfahrzeug. Es geht um Dämpfervorrichtungen, die den Fahrzeugaufbau mit jeweils einem Rad koppeln, um die Bewegung des Rades relativ zum Fahrzeugaufbau zu dämpfen.

Es ist bekannt, Messgrößen aufzunehmen, um die Dämpfung im Rahmen einer Regelung bewirken zu können. Aus der EP 0 354 238 B1, der EP 0 417 702 B1 und der EP 1 424 227 B1 ist es bekannt, hierzu druckempfindliche Sensoren zu verwenden, im Beispiel der ersten beiden genannten Druckschriften sind dies piezoelektrische Sensoren, kurz auch als Piezoelemente bezeichnet. Bei Piezoelementen entsteht bei Druck eine um Ausmaß des Druckes abhängige Spannung, welche die Messgröße ist.

Bei den Kraftfahrzeugen aus den genannten Druckschriften wird für den (Piezo-) Sensor gesonderter Bauraum benötigt, und zwar nicht nur für das Piezoelement selbst, sondern auch für eine Abschirmung desselben vor Umwelteinflüssen. Entsprechend ist eine aufwendige Montage nötig.

Es wäre jedoch vorteilhaft, könnte bei Dämpfervorrichtungen der Bauraum für ein Piezoelement kompakter bereitgestellt werden, als dies bisher der Fall ist.

Somit ist es Aufgabe der Erfindung, bei einem Kraftfahrzeug mit einer Dämpfervorrichtung möglichst wenig Platz für Sensorik zur Dämpfervorrichtung zu verbrauchen. Hierbei soll die Montage möglichst vereinfacht sein.

Die Aufgabe wird durch ein Kraftfahrzeug mit den Merkmalen gemäß Patentanspruch 1, eine Dämpfervorrichtung mit den Merkmalen gemäß Patentanspruch 6 sowie durch Bauteile gemäß den Patentansprüchen 10 und 11 gelöst.

Bei dem erfindungsgemäßen Kraftfahrzeug ist somit das Piezoelement in das Material eines Metallbauteils des Kraftfahrzeugs integriert.

Es muss also nicht gesondert Raum für das Piezoelement an irgendeinem Bauteil bereitgestellt werden und gleichzeitig für gute messtechnische Anbindung gesorgt werden. Durch die Integration des Piezoelements in das Metallbauteil des Kraftfahrzeugs erfasst das Piezoelement unmittelbar mechanische Spannungen im Metallbauteil des Kraftfahrzeugs, die das Piezoelement als Druck misst, der in Beziehung zur von der Dämpfervorrichtung bereitgestellten Dämpfkraft zu setzen ist. Das Piezoelement nimmt den Druck vollständig auf, weil es von dem Material des Metallbauteils umgeben ist. Bevorzugt ist dies so gestaltet, dass das Piezoelement vollständig von diesem Metallmaterial umgeben ist, damit es einerseits geschützt ist und andererseits möglichst effektiv Druck misst.

Eine solche Integration eines Piezoelements in ein Metallbauteil des Kraftfahrzeugs ist naturgemäß bereits bei der Herstellung des Metallbauteils vorzunehmen. Ein Verfahren, bei dem die Integration besonders erfolgreich ist, ist das Druckgießen eines Aluminiumbauteils. Hierbei können kürzlich entwickelte Techniken eingesetzt werden, vergleiche beispielsweise den Artikel "Druckgießtechnische Integration von piezokeramischen Modulen in Aluminiumbauteile" im von R. Neugebauer herausgegebenen Tagungsband zum ersten wissenschaftlichen Symposium des SFB/Transregio 39, "Großserienfähige Produktionstechnologien für leichtmetall- und faserverbundbasierte Komponenten mit integrierten Piezosensoren und -aktoren", 14. November 2007, am 13. August 2009 erhältlich unter: http://www.pt-piesa.tu-chemnitz.de/tagungsband.pdf, Seiten 51 bis 56 (vgl. auch ferner die übrigen Artikel in diesem Tagungsband). Bei dem in diesem Artikel beschriebenen Verfahren werden die einzelnen Piezoelemente mit Drahtgewebe oder Streckmetall ummantelt. Hierdurch wird eine Vielzahl von Stützstellen pro Flächeneinheit geboten, so dass eine stabile Einbindung einer Piezokeramik in die Aluminiummatrix möglich ist.

Besonders effektiv lässt sich die Dämpfkraft messen, wenn das Metallbauteil entweder eine Anbindung der Dämpfervorrichtung an das Rad oder an den Fahrzeugaufbau bereitstellt, denn dort wirken die stärksten Kräfte. Alternativ kann das Metallbauteil auch ein Lager im Fahrzeugaufbau für die Dämpfervorrichtung bereitstellen.

Die erfindungsgemäße Dämpfervorrichtung für ein Kraftfahrzeug weist eine erste Anbindung zum Koppeln der Dämpfervorrichtung mit einem Fahrzeugaufbau und eine zweite Anbindung zum Koppeln der Dämpfervorrichtung mit einem Rad auf, und sie ist gekennzeichnet durch ein Piezoelement in einem Metallbauteil der Dämpfervorrichtung, das in das Metallmaterial des Metallbauteils integriert ist, wobei wie bereits oben ausgeführt das Metallbauteil bevorzugt ein Aluminiumbauteil ist, das durch Druckgießen hergestellt ist und das Piezoelement hierbei eingegossen ist. Das Piezoelement ist bei einer Ausführungsform in eine Kolbenstange integriert, bevorzugt im Bereich der ersten Anbindung. Das Piezoelement kann auch an der zweiten Anbindung bereitgestellt sein.

Insbesondere durch ein Bauteil mit einer solchen Kolbenstange und einem damit einstückigen Kolben, wie es in einer Dämpfervorrichtung der erfindungsgemäßen Art einsetzbar ist und aus Aluminium herstellbar ist, kann ein solches Piezoelement integriert sein, insbesondere im Bereich der Kolbenstange, die eine Anbindung für den Fahrzeugaufbau bereitstellt. Die Herstellung erfolgt hierbei durch Druckgießen aus Aluminium unter Eingießen des Piezoelements.

Ein zweites Bauteil für eine Dämpfervorrichtung wird erfindungsgemäß bereitgestellt. In an sich bekannter Weise weist es einen Kolbenbehälter zur Aufnahme eines Kolbens, insbesondere an dem soeben beschriebenen Bauteil, auf und eine damit einstückige rohrförmige Anbindung. Auch in dieses Bauteil lässt sich ein Piezoelement integrieren, indem es durch Druckgießen aus Aluminium hergestellt wird und hierbei das Piezoelement eingegossen wird. Es eignet sich insbesondere der Bereich zwischen dem Kolbenbehälter und rohrförmigen Anbindung zur Aufnahme des Piezoelements.

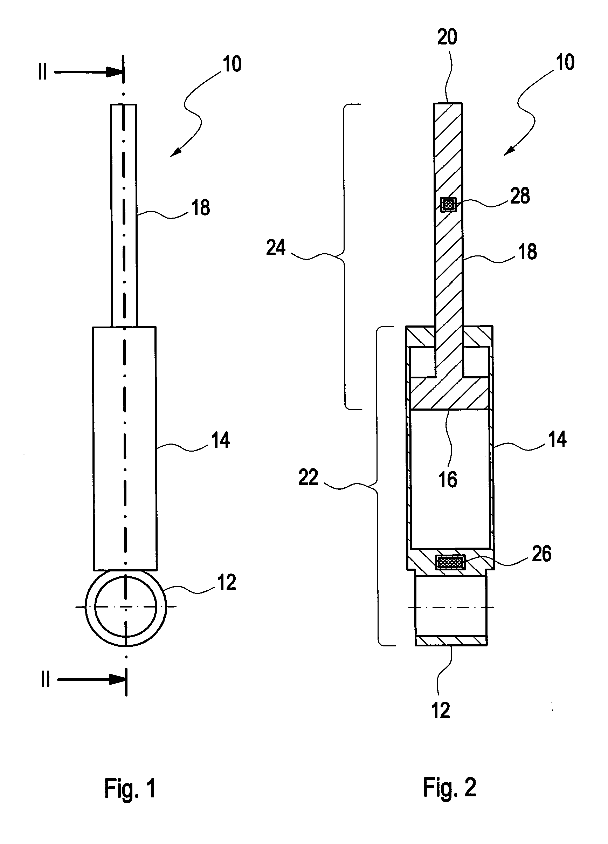

Nachfolgend wird eine bevorzugte Ausführungsform der Erfindung unter Bezug auf die Zeichnung beschrieben, die in der
- Fig. 1: eine Seitenansicht einer erfindungsgemäßen Dämpfervorrichtung zeigt und
- Fig. 2: den Schnitt II-II durch die Dämpfervorrichtung aus Fig. 1 zeigt.

Eine im Ganzen mit 10 bezeichnete Dämpfervorrichtung für ein Kraftfahrzeug weist zur Anbindung an ein Rad eines Kraftfahrzeuges ein Rohr 12 auf, das man auch als "Dämpferauge" bezeichnet. Einstückig mit dem Rohr 12 ist ein Zylinder 14 für einen Kolben 16 an einer Kolbenstange 18 angebunden. Das Ende 20 der Kolbenstange 18 wird an einem Fahrzeugbau eines Kraftfahrzeugs angebunden, wobei die hierfür eingesetzten Anbindungselemente in der Zeichnung nicht dargestellt sind.

Es gibt somit zwei Bauteile der Dämpfervorrichtung, ein erstes Bauteil 22 mit dem Rohr 12 und dem Zylinder 14 und ein zweites Bauteil 24 mit Kolben 16 und Kolbenstange 18. Beide Bauteile sind einstückig aus Aluminium und durch Druckguss hergestellt. Hierbei wurden Piezoelemente 26, 28 in die Bauteile integriert: Das Piezoelement 26 ist in einem Fußbereich des Zylinders 14 zu dem Rohr 12 hin angeordnet, so dass es von einem Rad auf den Zylinder 14 ausgeübte Kraft, die mit einer Druckbeaufschlagung des gesamten Bauteils 22 einhergeht, besonders effektiv messen kann. Das Piezoelement 28 ist in die Kolbenstange 18 integriert und misst ebenfalls eine bei einer Relativbewegung zwischen Fahrzeugaufbau und Rad bereitgestellte Dämpfkraft besonders effektiv.

Das Eingießen von Piezoelementen 26 und 28 (piezoelektrischen Sensoren) ist aus dem Artikel von V. Bräutigam, M. Rübner, C. Körner, R. F. Singer "Druckgießtechnische Integration von piezokeramischen Modulen in Aluminiumgussbauteile aus dem von R. Neugebauer herausgegebenen Tagungsband zum ersten wissenschaftlichen Symposium des SFB/Transregio 39, "Großserienfähige Produktionstechnologien für leichtmetall- und faserverbundbasierte Komponenten mit integrierten Piezosensoren und -aktoren" am 14. November 2007 bekannt, der am 13. August 2009 unter der Adresse: http://www.pt-piesa.tu-chemnitz.de/tagungsband.pdf erhältlich war. Die Piezoelemente 26 und 28 werden bei der Herstellung der jeweiligen Bauteile 22 und 24 mit Drahtgewebe ummantelt, das während der Formfüllung einer Druckgussform eine Vielzahl von Stützstellen pro Flächeneinheit bietet und daher eine überkritische Durchbiegung der Piezoelemente verhindert. Die Piezoelemente bestehen im Beispielsfall aus einer monolithischen PZT-Folie, die in eine Polymermatrix eingebettet ist. In dieser Polymermatrix liegen auf beiden Seiten der Keramikfolie feine Kupfernetze zur Elektrodierung. Die Piezoelemente sind plattenförmige Bauteile mit einer flächigen Ausdehnung von 178x178 mm², die Plattendicke wird hierbei im Bereich von 2 mm bis 6,5 mm variiert.

Zum Aluminiumdruckguss wird die Standarddruckgießlegierung AlSi 9Cu3(226D) verwendet, die beim Einströmen in die Formkavität eine Temperatur von ca. 650° C aufweist.

Mit Hilfe der Dämpfervorrichtung 10 lässt sich die Relativbewegung eines Fahrzeugaufbaus gegenüber einem Rad geregelt festlegen. Für die Regelung werden die Messwerte der Piezoelemente 26 und 28 verwendet, um so eine vorbestimmte Dämpfkraft einstellen zu können. Als Steller wird z. B. ein in der Zeichnung nicht gezeigtes Ventil für Öl in dem Zylinder 14 eingesetzt.

Durch die Integration der Piezoelemente 26 und 28 in die jeweiligen Bauteile 22 und 24 wird kein zusätzlicher Bauraum für die Piezoelemente 26, 28 benötigt, und nachdem die Bauteile 22, 24 einmal hergestellt sind, ist auch keine aufwendige Montage für die Piezoelemente bei der Herstellung des Kraftfahrzeugs und der hierbei erfolgenden Montage der Dämpfervorrichtung notwendig. Somit wird wertvoller Bauraum im Kraftfahrzeug eingespart, und die Lösung ist gleichzeitig kostengünstig.

## Patentansprüche

1. Kraftfahrzeug mit einem Fahrzeugaufbau und zumindest einem mit diesem gekoppelten Rad, und mit einer Dämpfervorrichtung (10), die einerseits an den Fahrzeugaufbau und andererseits an ein Rad angekoppelt ist, wobei der Dämpfervorrichtung ein Piezoelement (26, 28) zur Messung einer von der Dämpfervorrichtung (10) bereitgestellten Dämpfkraft zugeordnet ist,
**dadurch gekennzeichnet, dass**
das Piezoelement (26, 28) in das Material eines Metallbauteils (22, 24) des Kraftfahrzeugs integriert ist.

2. Kraftfahrzeug nach Anspruch 1, bei dem das Piezoelement (26, 28) in dem Metallbauteil (22, 24) vollständig von dem Metallmaterial umgeben ist.

3. Kraftfahrzeug nach Anspruch 1 oder 2, bei dem das Metallbauteil ein Aluminiumbauteil (22, 24) ist und durch Druckgießen hergestellt und das Piezoelement (26, 28) hierbei eingegossen ist.

4. Kraftfahrzeug nach einem der vorhergehenden Ansprüche, bei dem das Metallbauteil (22) eine Anbindung der Dämpfervorrichtung (10) an das zugehörige Rad bereitstellt.

5. Kraftfahrzeug nach einem der vorhergehenden Ansprüche, bei dem das Metallbauteil (24) eine Anbindung der Dämpfervorrichtung (10) an den Fahrzeugaufbau bereitstellt.

6. Kraftfahrzeug nach einem der vorhergehenden Ansprüche, bei dem das Metallbauteil ein Lager im Fahrzeugaufbau für die Dämpfervorrichtung bereitstellt.

7. Dämpfervorrichtung (10) für ein Kraftfahrzeug, mit einer ersten Anbindung (20) zum Koppeln der Dämpfervorrichtung mit einem Fahrzeugaufbau und mit einer zweiten Anbindung (12) zum Koppeln der Dämpfervorrichtung (10) mit einem Rad,
**gekennzeichnet durch**
ein Piezoelement (26, 28) in einem Metallbauteil (22, 24) der Dämpfervorrichtung, das in das Metallmaterial des Metallbauteils integriert ist.

8. Dämpfervorrichtung für ein Kraftfahrzeug, bei dem das Metallbauteil ein Aluminiumbauteil (22, 24) ist und durch Druckgießen hergestellt und das Piezoelement (26, 28) hierbei eingegossen ist.

9. Dämpfervorrichtung (10) nach Anspruch 7 oder 8, bei dem ein Piezoelement (28) in einer Kolbenstange (18) bereitgestellt ist.

10. Dämpfervorrichtung (10) nach einem der Ansprüche 7 bis 9, bei dem ein Piezoelement (28) an der zweiten Anbindung (12) bereitgestellt ist.

11. Bauteil (24) für eine Dämpfervorrichtung (10) zur Dämpfung der Relativbewegung zwischen einem Fahrzeugaufbau und einem Rad eines Kraftfahrzeuges, mit einem Kolben (16) und einer Kolbenstange (18), hergestellt durch Druckgießen aus Aluminium mit in das Aluminium integriertem, beim Druckgießen eingegossenen Piezoelement (28).

12. Bauteil (22) für eine Dämpfervorrichtung (10) zur Dämpfung der Relativbewegung zwischen einem Fahrzeugaufbau und einem Rad eines Kraftfahrzeuges, mit einem Kolbenbehälter (14) zur Aufnahme eines Kolbens (16) und einer mit dem Kolbenbehälter (14) einstückigen rohrförmigen Anbindung (12), hergestellt durch Druckgießen aus Aluminium mit in das Aluminium integriertem und beim Druckgießen eingegossenen Piezoelement (26), mit dem Piezoelement (26) insbesondere im Bereich zwischen dem Kolbenbehälter (14) und der rohrförmigen Anbindung (12).
